# EUROPÄISCHE PATENTSCHRIFT

(11) **EP 2 582 638 B1**
(45) Veröffentlichungstag und Bekanntmachung des Hinweises auf die Patenterteilung: **25.05.2016**
(21) Anmeldenummer: 11717945.7
(22) Anmeldetag: 23.04.2011
(51) Int. Cl.: C03B 9/453

(54) **VORRICHTUNG ZUM ÜBERSCHIEBEN VON GLASGEGENSTÄNDEN AUF EIN TRANSPORTBAND**
DEVICE FOR PUSHING GLASS OBJECTS ONTO A CONVEYOR BELT
DISPOSITIF POUR SE FAIRE GLISSER DES OBJETS EN VERRE SUR UNE BANDE TRANSPORTEUSE

(30) Priorität: 18.06.2010 DE 102010024301
(43) Veröffentlichungstag der Anmeldung: 24.04.2013
(73) Patentinhaber: Heye International GmbH, 31683 Obernkirchen (DE)
(72) Erfinder: FELGENHAUER, Benedikt, 32049 Herford (DE); HÜBNER, Matthias, 31655 Stadthagen (DE)
(74) Vertreter: Sobisch, Peter
(86) Internationale Anmeldenummer: PCT/EP2011/002071
(87) Internationale Veröffentlichungsnummer: WO 2011/157315

(56) Entgegenhaltungen:
- EP-A1- 1 627 858
- EP-A1- 1 886 977
- DE-A1-102008 027 911
- DE-B3-102004 010 238
- GB-A- 2 435 025

## Beschreibung

Die Erfindung bezieht sich auf eine Vorrichtung entsprechend dem Oberbegriff des Anspruchs 1.

Derartige Vorrichtungen sind dazu bestimmt, den einer Fertigform einer Glasformmaschine entnommenen und auf einer ruhenden Absetzplatte abgestellten Glasgegenstand, insbesondere Hohlglasgegenstand auf ein sich kontinuierlich mit einer gleichförmigen Geschwindigkeit bewegendes Transportband mittels eines Überschiebers zu überführen. Die Glasgegenstände müssen auf dem Transportband in einer Hintereinanderaufstellung positioniert werden, um anschließend in einen Kühlofen eingeführt zu werden. Da bei IS-Maschinen (individual section) das Transportband mit einer Vielzahl von Fertigungsstationen zusammenwirkt, deren jede mit einer Absetzplatte versehen ist, muss der Vorgang des Überschiebens der Glasgegenstände innerhalb eines von dem Arbeitstakt der übrigen Fertigungsstationen sowie der Transportgeschwindigkeit des Bandes abhängigen Zeitintervall abgewickelt werden, wobei das Überschieben ferner dahingehend angelegt sein muss, dass ein Umfallen oder ein Beschädigen der Glasgegenstände ebenso vermieden werden muss wie ein ungenaues Positionieren auf dem Band. Am Ende der Bewegung entlang einer Überführungskurve muss jeder Glasgegenstand in einer definierten Position auf dem Band aufstehen und sich richtungs- und geschwindigkeitsgleich mit diesem bewegen.

Aus dem Dokument DE 10 2004 010 238 B3 ist eine solche Vorrichtung bekannt, bei welcher ein an seinem einen Ende um eine vertikale ortsfest angeordnete Achse schwenkbarer erster Hebel an seinem anderen Ende ebenfalls um eine vertikale Achse schwenkbar das eine Ende eines zweiten Hebels trägt, an dessen anderem Ende wiederum um eine senkrechte Achse schwenkbar ein mit drei Schubfingern ausgerüsteter Überschieber gelagert ist. Den Rotationen des ersten Hebels um die ortsfeste Achse, des zweiten Hebels gegenüber dem ersten Hebel sowie des Überschiebers gegenüber dem zweiten Hebel sind drei voneinander unabhängig steuerbare, ortsfest angeordnete Antriebe zugeordnet, wobei aus der Überlagerung der durch diese generierten drei Teilbewegungen eine Überführungskurve beginnend an einem Aufnahmepunkt auf der Absetzplatte und endend an einem Übergabepunkt auf dem Transportband darstellbar ist. Die Übertragung der Drehbewegungen der drei Antriebe über die Hebel bis zu dem Überschieber wird mittels Zahnriemengetrieben bewirkt, deren Betrieb wartungsintensiv gilt. Hinzu kommt ein vergleichsweise großer konstruktiver Aufwand, der durch eine anfängliche Zusammenfassung der Abtriebsbewegungen von drei fest angeordneten Antrieben über ineinandergeführte Hohlwellen und anschließende Trennung dieser Bewegungen zwecks Einleitung in das jeweilige Bauteil bedingt ist, dessen Drehbewegung zu steuern ist.

Aus dem Dokument DE 10 2008 027 911 A1 ist eine weitere vergleichbare Vorrichtung bekannt, bei der der Überschieber mit dem Ende eines Kurbelarms in fester Verbindung steht, der mit einer Welle in drehfester Verbindung steht, die auf einem Drehteller exzentrisch zu dessen ortsfest angeordneter, sich parallel zu der genannten Welle erstreckenden Achse drehbar gelagert ist. Die genannte Welle bildet die Abtriebswelle eines ebenfalls durch den Drehteller getragenen ersten Elektromotors, wobei der Drehteller unmittelbar mit einem ortsfest angeordneten zweiten Elektromotor in Antriebsverbindung steht. Diese Ausgestaltung ermöglicht zwar eine Vereinfachung der für die Übertragung der Teilbewegungen der beiden Elektromotoren erforderlichen Getriebeelemente, wobei jedoch im Vergleich zu der aus dem Dokument DE 10 2004 010 238 B3 bekannten Vorrichtung geringere Gestaltungsmöglichkeiten für die Darstellung einer Überführungskurve gegeben sind, da nur zwei Teilbewegungen zu überlagern sind und auf eine Schwenkung des Überschiebers gegenüber dem genannten Kurbelarm verzichtet worden ist.

Schließlich ist aus der EP 1 886 977 A1 eine weitere Vorrichtung zum Überschieben von Glasgegenständen auf ein Transportband bekannt, bei welcher zwei koaxial zueinander in einem Maschinengestell angeordnete Elektromotoren an den jeweiligen Enden ihrer Abtriebswellen mit Kurbelarmen in fester Verbindung stehen, wobei das freie Ende des einen Kurbelarmes über ein Gelenk unmittelbar an einer, einen Überschieber tragenden Struktur und wobei das freie Ende des anderen Kurbelarmes über ein Gelenk mit einem Zwischenhebel und dieser an seinem dem Kurbelarm abgekehrten Ende über ein weiteres Gelenk an der genannten Struktur angelenkt ist. Die Achsen sämtlicher Gelenke verlaufen parallel zueinander. Durch gleichläufige Ansteuerung der beiden Elektromotoren ist eine Drehbewegung des Überschiebers um die gemeinsame Achse der beiden Motoren darstellbar, wobei durch gegenläufige Ansteuerung eine Annäherung oder eine Entfernung des Überschiebers von einer Absetzplatte bzw. einem Transportband darstellbar sind. Die Überführungskurve ausgehend von einer Absetzplatte bis auf ein Transportband ist somit ein Kreisbogen um die gemeinsame Achse der beiden Motoren. Da nur zwei Teilbewegungen zu überlagern sind, ergeben sich auch bei dieser Vorrichtung im Vergleich zu derjenigen gemäß dem Dokument DE 10 2004 010 238 B3 geringere Gestaltungsmöglichkeiten für die Überführungskurve.

Es ist die Aufgabe der Erfindung, eine Vorrichtung der eingangs bezeichneten Art in einfacher Weise bei optimalen, insbesondere bedarfsgerechten Gestaltungsmöglichkeiten der Überführungskurve zu verbessern. Gelöst ist diese Aufgabe bei einer solchen Vorrichtung durch die Merkmale des Kennzeichnungsteils des Anspruchs 1.

Erfindungswesentlich ist hiernach, dass von den genannten drei Elektromotoren lediglich einer ortsfest angeordnet, die beiden übrigen hingegen an einem ortsfest um eine vertikale Achse schwenkbar gelagerten Ausleger, sich mit diesem drehend gehalten sind. Die beiden letztgenannten Motoren sind hierbei exzentrisch bezüglich der ortsfesten Achse gehalten. Gegenüber dem eingangs vorgestellten Stand der Technik, soweit es sich um Ausführungsformen handelt, bei denen drei ortsfest angeordnete, unabhängig voneinander steuerbare Elektromotoren zur Darstellung von drei Teilbewegungen vorliegen, ergibt sich infolge des Fortfalls von Getriebekomponenten, die zur anfänglichen räumlichen Zusammenfassung und zur Weiterleitung der Teilbewegungen dienen, ein beträchtlich verminderter baulicher Aufwand. Gegenüber dem Stand der Technik, soweit es sich um Ausführungsformen handelt, bei denen zwei unabhängig voneinander steuerbare Elektromotoren zur Darstellung von zwei Teilbewegungen vorliegen, von denen einer ortsfest angeordnet ist, ergibt sich der Vorteil verbesserter Darstellungs-, insbesondere Variierungsmöglichkeiten der Überführungskurve. Die sich im Vergleich zu bekannten, drei zu steuernde Achsen aufweisenden Vorrichtungen geringere Teilevielfalt bringt Einsparungen für die Fertigung sowie die Montage sowie für die Wartung mit sich.

Die Merkmale des Anspruchs 2 sind auf eine vorteilhafte Ausbildung der für die Schwenkung des Überschiebers gegenüber dem ihn tragenden Kurbelarm gerichtet. Die hier eingesetzte Viergelenkkette, welche eine Schubstange einbezieht, kann als wartungsarm und insgesamt robust angesehen werden. Sie ist insbesondere geeignet für die Verwendung unter den Betriebsbedingungen einer Glashütte.

Die Merkmale der Ansprüche 3 und 4 sind auf die Anordnung und Ausgestaltung eines mit dem Ausleger in Verbindung stehenden Aufnahmekörpers gerichtet, der als Träger der beiden sich mit dem Ausleger bewegenden Elektromotoren fungiert. Die eine der beiden Aufnahmen ist in einem sich koaxial zu dieser erstreckenden , vorzugsweise zylindrischen Ansatzteil fortgeführt, in welchem unter Zwischenanordnung einer Hohlwelle ein den Anlenkungspunkt der genannten Schubstange aufnehmender Ringkörper gelagert ist. Ein Deckelteil, aus welchem sich die Muffe oberseitig herauserstreckt, bildet den oberen Abschluss des Aufnahmekörpers. Das Ansatzteil ist vorzugsweise einstückig mit dem Deckelteil ausgebildet. Einstückig ausgebildet sein können auch der Ausleger und der Aufnahmekörper.

Die Antriebsverbindung zwischen dem dritten Elektromotor und der Hohlwelle ist entsprechend den Merkmalen des Anspruchs 5 über ein Stirnradgetriebe eingerichtet. Es ist dies das einzige Getriebe, welches im Rahmen der Übertragung der Abtriebsbewegungen der drei Elektromotoren benötigt wird.

Die Merkmale der Ansprüche 6 und 7 sind auf die Ausgestaltung eines die Elektromotoren sowie diesen nachgeordnete Übertragungsglieder zumindest teilweise aufnehmendes Gehäuse gerichtet. Dieses ist geschlossen ausgebildet und oberseitig durch ein Schutzblech gekennzeichnet, aus dem lediglich das eingangs genannte Ansatzteil herausragt. Der in den vorstehenden Ausführungen und im Folgenden benutzte Ausdruck "vertikal" ist auf eine ebene Grundseite dieses Gehäuses gerichtet. Wesentlich ist, dass somit alle wesentlichen Komponenten der Vorrichtung gegenüber den äußeren Einflüssen des Betriebs einer Glashütte geschützt angeordnet sind.

Die Merkmale der Ansprüche 8 bis 10 sind auf die Anordnung des ortsfesten Elektromotors innerhalb des Gehäuses gerichtet. Dieser ist in einem gehäusefesten Rahmengestell gehalten und es ist zur Lagerung des Auslegers ein mit diesem in fester Verbindung stehender Hohlzylinder vorgesehen, durch den der Ausleger auf einer hohlwellenartigen Nabe, innerhalb welcher die Abtriebswelle des ersten Elektromotors verläuft, um deren Achse drehbar gelagert ist. Auf diesem Wege ist eine stabile, insbesondere beanspruchungsgerechte Lagerung des Auslegers eingerichtet.

Ein weiterer Schutz für die Vorrichtung vor den Einwirkungen von Hitze, Feuchtigkeit, abrasiven Stäuben usw. ergibt sich entsprechend den Merkmalen des Anspruchs 11 dadurch, dass das Gehäuse unterhalb der Ebene einer Absetzplatte angeordnet ist.

Das mechanische Konzept der Vorrichtung, bei welchem anders als in dem vorstehend dargelegten Stand der Technik weniger Drehbewegungen ineinander geführt sind, ermöglicht den Einsatz von stabilen Trag-Stützlagerungen, deren dynamische Tragzahlen hoch ausfallen, so dass eine entsprechend hohe Standzeit zu erwarten ist.

Die Erfindung wird im Folgenden unter Bezugnahme auf das in den Zeichnungen schematisch wiedergegebene Ausführungsbeispiel näher erläutert werden. Es zeigen:

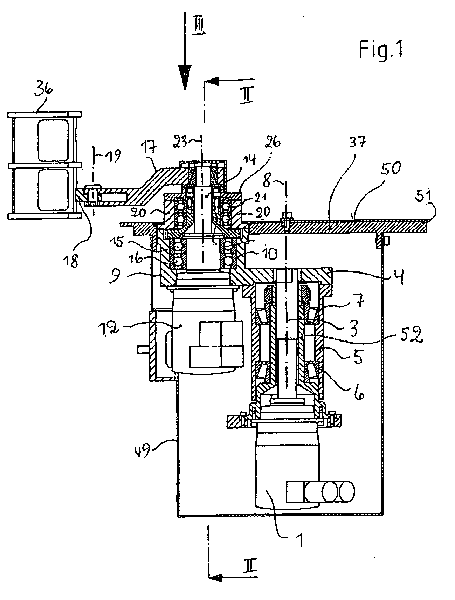

- Fig. 1: eine Darstellung der erfindungsgemäßen Vorrichtung in einer vertikalen Schnittebene;
- Fig. 2: eine teilweise winkelversetzte Darstellung der Vorrichtung gemäß Fig. 1 in einer Schnittebene II - II;
- Fig. 3: eine Draufsicht auf die Vorrichtung entsprechend einer Blickrichtung III der Fig. 1;

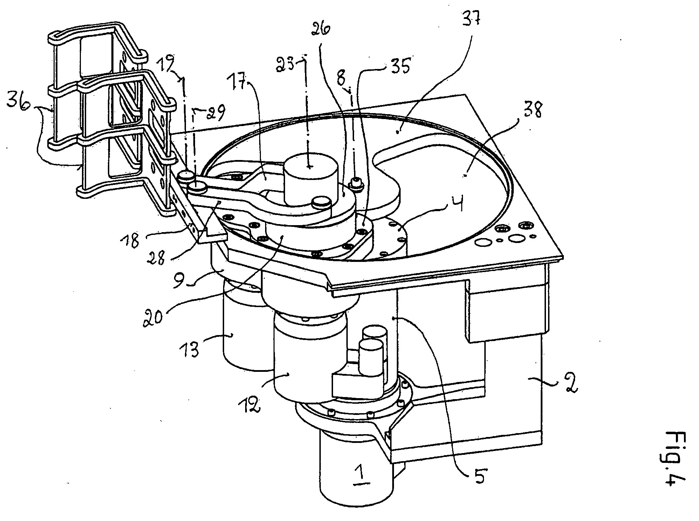

- Fig. 4: eine perspektivische oberseitige Ansicht der Vorrichtung gemäß Fig. 1.

Mit 1 ist ein in einem Rahmengestell 2 ortsfest angeordneter erster Elektromotor bezeichnet, dessen Abtriebswelle 3 mit einem Ausleger 4 drehfest verbunden ist. Die Abtriebswelle 3 erstreckt sich durch eine hohlwellenartige Nabe 52 hindurch und es steht der Ausleger 4 mit einem, die Nabe 52 umgebenden Hohlzylinder 5 in Verbindung, über welchen er mittels Wälzlagern 6, 7 auf der Nabe 52 gelagert ist.

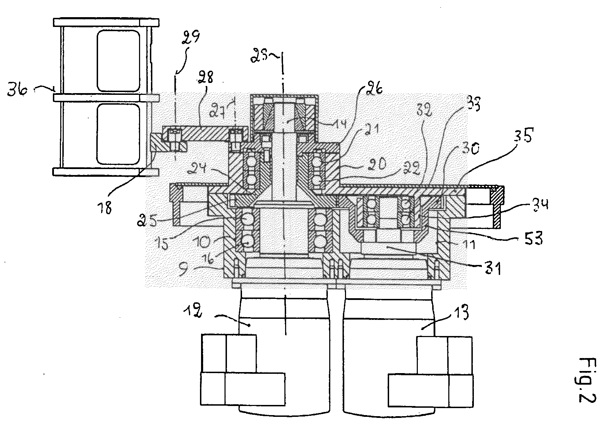

Der somit um eine vertikale ortsfeste Achse 8 drehbar gelagerte Ausleger 4 trägt an seinem der Achse 8 abgekehrten Ende einen Aufnahmekörper 9, welcher wie Fig. 2 zeigt, in einer Nebeneinanderanordnung zwei zylindrische Aufnahmen 10, 11 aufweist, deren Achsen sich parallel zu der Achse 8 erstrecken.

In den unteren Abschnitt der Aufnahme 10 ist ein zweiter Elektromotor 12 und in den unteren Abschnitt der Aufnahme 11 ein dritter Elektromotor 13 eingesetzt.

Die über Wälzlager 15, 16 innerhalb der Aufnahme 10 gelagerte Welle 14 ist die Abtriebswelle des Elektromotors 12 und es steht diese an ihrem oberen Ende mit einem Kurbelarm 17 in drehfester Verbindung, welcher sich im wesentlichen senkrecht zu der Welle 14 erstreckt. Das Ende des Kurbelarms 17 ist an einem Überschieber 18 um eine senkrechte Achse 19 schwenkbar angelenkt.

Auf die Aufnahme 10 schließt sich oberseitig ein zylindrisches Ansatzteil 20 an, innerhalb welchem über Wälzlager 21, 22 eine sich koaxial zu der Achse 23 der Abtriebswelle 14 erstreckende erste Hohlwelle 24 gelagert ist, welche an ihrem unteren Ende einen Zahnkranz 25 trägt. Die Hohlwelle 24 steht an ihrem oberen Ende mit einem Ringkörper 26 in fester Verbindung, auf dem um eine Achse 27 das eine Ende einer Schubstange 28 schwenkbar angelenkt ist, deren anderes Ende um eine Achse 29 mit Abstand von der Achse 19 schwenkbar an dem Überschieber 18 angelenkt ist.

Der Kurbelarm 17 bildet mit der Schubstange 28 aufgrund der Anordnung der Achsen 19, 23, 27, 29 eine Viergelenkkette, so dass nach Maßgabe einer Drehung der Hohlwelle 24 um die Achse 23 eine Drehung des Überschiebers 18 um die Achse 19 relativ zu dem Kurbelarm 17 darstellbar ist.

Der Zahnkranz 25 steht mit einem Zahnkranz 30 im Eingriff, der an einer zweiten, mit der Abtriebswelle 31 des dritten Elektromotors 13 drehfest verbundenen und sich koaxial zu dieser erstreckenden Hohlwelle 53 angeformt ist. Die Abtriebswelle 31 des Elektromotors 13 ist mittels Wälzlagern 32, 33 in einem in den Aufnahmekörper 9 hineinragenden zylindrischen Ansatzteil 34 eines Deckelteils 35 gelagert, welches mit dem Ansatzteil 20 in fester Verbindung steht. Die beiden Zahnkränze 25, 30 bilden das einzige im Rahmen der Vorrichtung eingesetzte Stirnradgetriebe.

An dem Überschieber 18 ist in sich bekannter Weise eine Anordnung Schubfinger 36 befestigt, die zum Schieben der Glasgegenstände bestimmt sind.

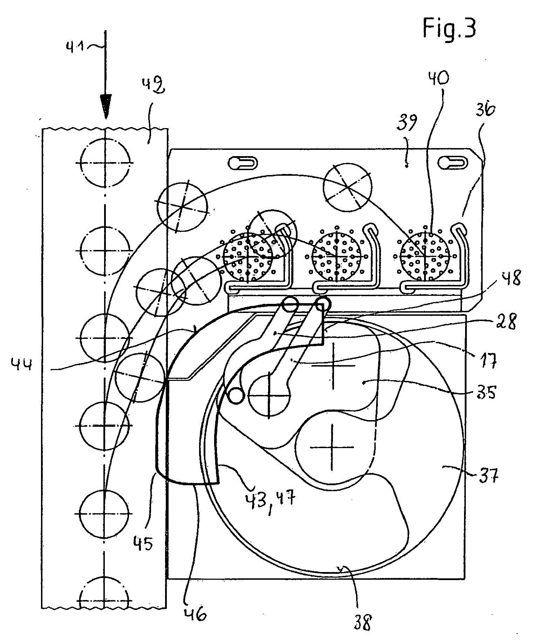

Wie sich aus vorstehendem ergibt, steht der erste Elektromotor 1 in Antriebsverbindung mit dem Aufnahmekörper 9 und damit dem Ansatzteil 20, welches oberseitig aus einer, in eine Abdeckung 37 eingeformten Ausnehmung 38 herausragt. In dieser Ausnehmung 38, deren Gestalt aus Fig. 3 ersichtlich ist, ist das Ansatzteil 20 um die ortsfeste Achse 8 innerhalb dieser Ausnehmung 38 hin- und hergehend mittels des Elektromotors 1 exzentrisch schwenkbar angeordnet.

Der zweite Elektromotor 12 steht in Antriebsverbindung mit dem Kurbelarm 17, und zwar mit Hinblick auf die Darstellung einer Drehbewegung des durch die Lage der Achse 19 definierbaren Anlenkungspunktes auf dem Überschieber 18 relativ zu der zusammen mit dem Ausleger 4 beweglichen Achse 23 der Abtriebswelle 14.

Der dritte Elektromotor 13 steht über die miteinander im Eingriff stehenden Zahnkränze 25, 30 in Antriebsverbindung mit dem Ringkörper 26 und damit der Schubstange 28 zwecks Darstellung einer Drehbewegung des Überschiebers 18 relativ zu dem Kurbelarm 17 um die Achse 19.

Mit 49 ist ein Gehäuse bezeichnet, innerhalb welchem die Elektromotoren 1, 12, 13 sowie die vorstehend genannten Getriebeteile angeordnet und vor Umgebungseinflüssen geschützt sind. Zusätzlich ist ein Schutzblech 50 vorgesehen, welches den oberen Abschluss bildet und lediglich mit einer an das Ansatzteil 20 angepassten Öffnung versehen ist. Das Schutzblech 50 bewegt sich während des Betriebes der Vorrichtung zusammen mit dem Ansatzteil 20 und steht unter Zwischenanordnung einer Dichtung 51 mit dem Gehäuse 49 in Verbindung.

Der durch die Aufnahmen 10, 11 sowie das Ansatzteil 20 umgrenzte, oberseitig durch das Deckelteil 35 sowie den Ringkörper 26 geschlossene Raum kann zur Aufnahme einer Ölfüllung genutzt werden, nachdem dieser Raum unterseitig durch zugekehrte Gehäuseteile der Elektromotoren 12, 13 geschlossen ist. Auf diese Weise ist eine an der Lebensdauer der Vorrichtung orientierte Schmierung darstellbar.

Lagerstellen, die großer Hitze ausgesetzt sind , können als Trockengleitlager ausgelegt sein, die als wartungsfrei angesehen werden und deren Austausch sich einfacher gestaltet als derjenige von Wälzlagern.

Zur Erläuterung der Überschiebebewegung wird im Folgenden insbesondere auf die Fig. 3 Bezug genommen.

Mit 39 ist eine Absetzplatte bezeichnet, auf der beispielhaft drei zu überschiebende Glasgegenstände 40 in einer senkrecht zu einer Richtung 41 verlaufenden Anordnung positioniert sind, in der die Förderrichtung eines mit gleichförmiger Geschwindigkeit fördernden Transportbandes 42 verläuft.

Durch entsprechendes Ansteuern der Elektromotoren 1, 12 und 13 werden nunmehr Teilbewegungen generiert, durch deren Überlagerung eine geschlossene Kurve 43 darstellbar ist, entlang welcher sich die durch die Positionen der Achsen 19, 29 definierbaren Anlenkungspunkte des Überschiebers 18 und damit der Überschieber zwischen einer Ausgangsposition, welche durch ein erstmaliges Anliegen der Schubfinger 36 an den ruhenden Glasgegenständen 40 auf der Absetzplatte 36 gekennzeichnet ist, entlang einer gekrümmten Bahnkurve 44 bis zu einem Übergabepunkt 45, an dem sich die Schubfinger 36 von den Glasgegenständen 40 lösen, indem sie in etwa senkrecht zu der Förderrichtung 41 entlang eines Abschnitts 46 zurückgezogen werden, um anschließend wiederum über eine gekrümmte Bahnkurve 47 und einen Abschnitt 48 zurück in die Ausgangsposition zwecks Erfassung einer weiteren Gruppe von Glasgegenständen 40 zurückgeführt zu werden.

Im Übergabepunkt 45 bewegen sich die Schubfinger 36 geschwindigkeitsgleich mit dem Transportband 42. Die Überlagerung der genannten drei Teilbewegungen kann derart eingerichtet sein, dass die Kurve 43 bereits vor dem Übergabepunkt 45 in einem Punkt tangential in die Richtung 41 einmündet, so dass im Anschluss hieran sich die Schubfinger 36 entlang eines sich an den genannten Punkt anschließenden linearen Wegelements richtungs- und geschwindigkeitsgleich mit dem Transportband 42 bewegen. Auf diese Weise ist eine besonders schonende, ein Umfallen und gleichermaßen ein falsches Positionieren der Glasgegenstände auf dem Transportband 42 verhindernde Überführung gesichert.

Die Kurve 43 ist ferner mit der Maßgabe angelegt, dass die Glasgegenstände 40 auf dem Transportband 42 in einer Hintereinanderanordnung in der Richtung 41 aufstehen.

Der Zeitbedarf für einen Umlauf der Kurve 43 definiert somit den Arbeitstakt der Vorrichtung.

**Bezugszeichenliste:**

| | | | |
|---|---|---|---|
| 1. | Elektromotor | 28. | Schubstange |
| 2. | Rahmengestell | 29. | Achse |
| 3. | Abtriebswelle | 30. | Zahnkranz |
| 4. | Ausleger | 31. | Abtriebswelle |
| 5. | Hohlzylinder | 32. | Wälzlager |
| 6. | Wälzlager | 33. | Wälzlager |
| 7. | Wälzlager | 34. | Ansatzteil |
| 8. | Achse | 35. | Deckelteil |
| 9. | Aufnahmekörper | 36. | Schubfinger |
| 10. | Aufnahme | 37. | Abdeckung |
| 11. | Aufnahme | 38. | Ausnehmung |
| 12. | Elektromotor | 39. | Absetzplatte |
| 13. | Elektromotor | 40. | Glasgegenstand |
| 14. | Welle | 41. | Richtung |
| 15. | Wälzlager | 42. | Transportband |
| 16. | Wälzlager | 43. | Kurve |
| 17. | Kurbelarm | 44. | Bahnkurve |
| 18. | Überschieber | 45. | Übergabepunkt |
| 19. | Achse | 46. | Abschnitt |
| 20. | Ansatzteil | 47. | Bahnkurve |
| 21. | Wälzlager | 48. | Abschnitt |
| 22. | Wälzlager | 49. | Gehäuse |
| 23. | Achse | 50. | Schutzblech |
| 24. | Hohlwelle | 51. | Dichtung |
| 25. | Zahnkranz | 52. | Nabe |
| 26. | Ringkörper | 53. | Hohlwelle |
| 27. | Achse | | |

## Patentansprüche

1. Vorrichtung zum Überschieben von Glasgegenständen von einer Absetzplatte (39) einer Sektion einer I.S. (individual section) Glasformmaschine auf ein sich in einer Richtung (41) bewegendes Transportband (42) mittels eines, zum Schieben der Glasgegenstände eingerichteten, um eine vertikale Achse (19) schwenkbar an dem einen Ende eines Hebels gelagerten Überschiebers (18), wobei das andere Ende des Hebels mit einer um eine vertikale Achse (23) schwenkbar gelagerten, sich vertikal erstreckenden Welle (14) in Verbindung steht, wobei die Welle (14) um eine ortsfeste, sich vertikal erstreckende Achse (8) exzentrisch drehbar angeordnet ist, mit einem ersten Elektromotor (1), der zur Darstellung einer Drehbewegung der Welle (14) um die Achse (8) eingerichtet ist, mit einem zweiten Elektromotor (12), der zur Darstellung einer Drehbewegung der Welle (14) um die Achse (23) eingerichtet ist und mit einem dritten Elektromotor (13), der zur Darstellung einer Drehbewegung des Überschiebers (18) um die Achse (19) relativ zu dem genannten Hebel eingerichtet ist, **dadurch gekennzeichnet, dass** der zweite (12) sowie der dritte Elektromotor (13) an einem um die Achse (8) drehbar gelagerten Ausleger (4) gehalten sind, dass der Ausleger (4) mit der sich vertikal erstreckenden Abtriebswelle (3) des ersten ortsfest angeordneten Elektromotors (1) in drehfester Verbindung steht, dass der genannte Hebel ein mit der Welle (14) drehfest verbundener Kurbelarm (17) ist, dass an dem Überschieber (18) mit Abstand von der Achse (19) das eine Ende einer Schubstange (28) um eine vertikale Achse (29) schwenkbar angelenkt ist, deren anderes Ende über eine vertikale Achse (27), mit dem Kurbelarm (17) und dem Überschieber (18) eine Viergelenkkette bildend, in Antriebsverbindung mit dem dritten Elektromotor (13) steht, dass mit dem Ausleger (4) ein mit zwei Aufnahmen (10, 11) versehener Aufnahmekörper (9) in fester Verbindung steht, dass in den Aufnahmen (10, 11) der zweite (12) sowie der dritte Elektromotor (13) exzentrisch zu der Achse (8) gehalten sind, dass der Aufnahmekörper (9) oberseitig durch ein Deckelteil (35) geschlossen ist, dass aus dem Deckelteil (35) ein sich koaxial zu der Achse (23) erstreckendes Ansatzteil (20) herausragt, dass innerhalb des Ansatzteils (20), um die Achse (23) drehbar, eine Hohlwelle (24) gelagert ist, die mit einem Ringkörper (26) in Verbindung steht, an dem um die Achse (27) schwenkbar das zugekehrte Ende der Schubstange (28) angelenkt ist.

2. Vorrichtung nach Anspruch 1, **dadurch gekennzeichnet, dass** die Hohlwelle (24) über ein Stirnradgetriebe in Antriebsverbindung mit dem dritten Elektromotor (13) steht.

3. Vorrichtung nach einem der Ansprüche 1 oder 2, **gekennzeichnet durch** ein zumindest die Elektromotoren (1, 12, 13) aufnehmendes Gehäuse (49), welches oberseitig eine mit einer Ausnehmung (38) versehene Abdeckung (37) aufweist, wobei die Abmessungen sowie die Lage der Ausnehmung (38) an die während eines Arbeitstaktes der Vorrichtung hin und hergehende Drehung des Ansatzteils (20) um die Achse (8) angepasst sind.

4. Vorrichtung nach Anspruch 3, **gekennzeichnet durch** ein auf der Abdeckung (37) aufliegendes, eine Öffnung zur dichtenden Hindurchführung des Ansatzteils (20) aufweisendes Schutzblech (50), welches randseitig dichtend in einem Einstich der Abdeckung (37) geführt ist, sich mit dem Ansatzteil (20) um die Achse (8) drehend.

5. Vorrichtung nach einem der Ansprüche 3 bis 4, **dadurch gekennzeichnet, dass** der Elektromotor (1) in einem gehäusefesten Rahmengestell (2) gehalten ist.

6. Vorrichtung nach einem der Ansprüche 1 bis 5, **dadurch gekennzeichnet, dass** an dem Ausleger (4) ein sich senkrecht erstreckender Hohlzylinder (5) angeordnet ist, in dem der Ausleger (4) um die Achse (8) drehbar gelagert ist.

7. Vorrichtung nach Anspruch 6, **gekennzeichnet durch** eine hohlwellenartige Nabe (52), auf der der Hohlzylinder (5) um die Achse (8) drehbar gelagert ist und innerhalb welcher die Abtriebswelle (3) des ersten Elektromotors (1) verläuft.

8. Vorrichtung nach einem der Ansprüche 3 bis 7, **dadurch gekennzeichnet, dass** sich das Gehäuse (49) unterhalb der Ebene der Absetzplatte (39) befindet.

## Claims

1. Device for pushing glass objects from a dead plate (39) of a section of an I.S. (individual section) glassware forming machine onto a conveyor belt (42) moving in a direction (41) by means of a pusher (18) which is arranged to push the glass objects and is mounted on one end of a lever so as to be able to pivot about a vertical axis (19), wherein the other end of the lever is connected to a vertically extending shaft (14) which is mounted so as to be able to pivot about a vertical axis (23), wherein the shaft (14) is disposed so as to be able to rotate eccentrically about a stationary, vertically extending axis (8), having a first electric motor (1) which is arranged to provide a rotational movement of the shaft (14) about the axis (8), having a second electric motor (12) which is arranged to provide a rotational movement of the shaft (14) about the axis (23), and having a third electric motor (13) which is arranged to provide a rotational movement of the pusher (18) about the axis (19) relative to said lever, **characterised in that** the second (12) and the third electric motor (13) are held on a boom (4) which is mounted so as to be able to rotate about the axis (8), **in that** the boom (4) is connected to the vertically extending driven shaft (3) of the first stationary electric motor (1) for conjoint rotation therewith, **in that** said lever is a crank arm (17) connected to the shaft (14) for conjoint rotation therewith, **in that** one end of a push rod (28) is articulated on the pusher (18) at a distance from axis (19) so as to be able to pivot about a vertical axis (29), the other end of the push rod being drivingly connected to the third electric motor (13) via a vertical axis (27), thus forming a four bar chain with the crank arm (17) and the pusher (18), **in that** a receiving body (9) provided with two receivers (10, 11) is fixedly connected to the boom (4), **in that** the second (12) and the third electric motor (13) are held in the receivers (10, 11) in an eccentric manner with respect to the axis (8), **in that** the receiving body (9) is closed on the upper side by a cover part (35), **in that** a projection part (20) extending coaxially with respect to the axis (23) protrudes from the cover part (35), **in that** a hollow shaft (24) is mounted within the projection part (20) so as to be able to rotate about the axis (23) and is connected to an annular body (26) on which the facing end of the push rod (28) is articulated so as to be able to pivot about the axis (27).

2. Device as claimed in claim 1, **characterised in that** the hollow shaft (24) is drivingly connected to the third electric motor (13) via a spur gear mechanism.

3. Device as claimed in any one of claims 1 or 2, **characterised by** a housing (49) receiving at least the electric motors (1, 12, 13) and comprising, on the upper side, a cover (37) provided with an aperture (38), wherein the dimensions and position of the aperture (38) are adapted to the reciprocating rotation of the projection part (20) about the axis (8) during an operating cycle of the device.

4. Device as claimed in claim 3, **characterised by** a protective metal sheet (50) which lies on the cover (37), comprises an opening for the sealing through-passage of the projection part (20) and is guided at the edge in a sealing manner in a recess in the cover (37), thereby rotating with the projection part (20) about the axis (8).

5. Device as claimed in any one of claims 3 to 4, **characterised in that** the electric motor (1) is held in a frame (2) fixed to the housing.

6. Device as claimed in any one of claims 1 to 5, **characterised in that** a perpendicularly extending hollow cylinder (5) is disposed on the boom (4), with the boom (4) being mounted in this hollow cylinder so as to be able to rotate about the axis (8).

7. Device as claimed in claim 6, **characterised by** a hollow shaft-like hub (52) on which the hollow cylinder (5) is mounted so as to be able to rotate about the axis (8) and within which the driven shaft (3) of the first electric motor (1) extends.

8. Device as claimed in any one of claims 3 to 7, **characterised in that** the housing (49) is located below the plane of the dead plate (39).

## Revendications

1. Dispositif pour faire glisser des objets en verre d'une plaque de pose (39) d'une section d'une machine de formage de verre I.S. (section individuelle) sur une bande transporteuse (42) se déplaçant dans un sens (41) à l'aide d'un manchon (18) aménagé pour le glissement des objets en verre, logé de manière à pouvoir pivoter autour d'un axe vertical (19) sur l'une extrémité d'un levier, l'autre extrémité du levier étant en liaison avec un arbre (14) logé de manière à pouvoir pivoter autour d'un axe vertical (23), s'étendant verticalement, l'arbre (14) étant agencé de manière à pouvoir tourner et excentrée autour d'un axe (8) fixe s'étendant verticalement, avec un premier moteur électrique (1) qui est aménagé pour la réalisation d'un mouvement rotatif de l'arbre (14) autour de l'axe (8), avec un deuxième moteur électrique (12) qui est aménagé pour la réalisation d'un mouvement rotatif de l'arbre (14) autour de l'axe (23) et avec un troisième moteur électrique (13) qui est aménagé pour la réalisation d'un mouvement rotatif du manchon (18) autour de l'axe (19) par rapport au levier cité, **caractérisé en ce que** le deuxième (12) ainsi que le troisième moteur électrique (13) sont maintenus sur un bras (4) logé de manière à pouvoir tourner autour de l'axe (8), **en ce que** le bras (4) est en liaison fixe en rotation avec l'arbre d'entraînement (3) s'étendant verticalement depuis le premier moteur électrique (1) agencé fixement, **en ce que** le levier cité est un bras de manivelle (17) relié fixement en rotation à l'arbre (14), **en ce que** l'une extrémité d'une tige de poussée (28) est articulée de manière à pouvoir pivoter autour d'un axe vertical (29) au manchon (18) à distance de l'axe (19), dont l'autre extrémité est en liaison d'entraînement avec le troisième moteur électrique (13) par un axe vertical (27), formant avec le bras de manivelle (17) et le manchon (18) une chaîne à quatre articulations, **en ce qu'**un corps de réception (9) pourvu de deux logements (10, 11) est en liaison fixe avec le bras (4), **en ce que** dans les logements (10, 11), le deuxième (12) ainsi que le troisième (13) moteurs électriques sont maintenus de manière excentrée à l'axe (8), **en ce que** le corps de réception (9) est fermé côté supérieur par une partie de couvercle (35), **en ce qu'**une partie en saillie (20) s'étendant coaxialement à l'axe (23) dépasse de la partie de couvercle (35), **en ce que** dans la partie en saillie (20), un arbre creux (24) est logé de manière à pouvoir tourner autour de l'axe (23), lequel arbre est en liaison avec un corps annulaire (26), auquel l'extrémité tournée de la tige de poussée (28) est articulée de manière à pouvoir pivoter autour de l'axe (27).

2. Dispositif selon la revendication 1, **caractérisé en ce que** l'arbre creux (24) est en liaison d'entraînement avec le troisième moteur électrique (13) par le biais d'un engrenage droit.

3. Dispositif selon l'une quelconque des revendications 1 ou 2, **caractérisé par** un boîtier (49) recevant au moins les moteurs électriques (1, 12, 13) qui présente côté supérieur un recouvrement (37) pourvu d'un évidement (38), les dimensions ainsi que la position de l'évidement (38) étant adaptées à la rotation, allant et venant pendant un cycle de travail du dispositif, de la partie en saillie (20) autour de l'axe (8).

4. Dispositif selon la revendication 3, **caractérisé par** une tôle de protection (50) reposant sur le recouvrement (37), présentant une ouverture pour le passage étanche de la partie en saillie (20), laquelle tôle est guidée côté bord de manière étanche dans une encoche du recouvrement (37), tout en tournant avec la partie en saillie (20) autour de l'axe (8).

5. Dispositif selon l'une quelconque des revendications 3 à 4, **caractérisé en ce que** le moteur électrique (1) est maintenu dans un bâti de cadre (2) fixé au boîtier.

6. Dispositif selon l'une quelconque des revendications 1 à 5, **caractérisé en ce qu'**un cylindre creux (5) s'étendant perpendiculairement est agencé sur le bras (4), dans lequel cylindre le bras (4) est logé de manière à pouvoir tourner autour de l'axe (8).

7. Dispositif selon la revendication 6, **caractérisé par** un moyeu (52) de type arbre creux, sur lequel le cylindre creux (5) est logé de manière à pouvoir tourner autour de l'axe (8) et dans lequel l'arbre de sortie (3) du premier moteur électrique (1) s'étend.

8. Dispositif selon l'une quelconque des revendications 3 à 7, **caractérisé en ce que** le boîtier (49) se trouve sous le plan de la plaque de pose (39).
